## Europäisches Patentamt
## European Patent Office
## Office européen des brevets

(11) Veröffentlichungsnummer : **0 374 582 B1**

# EUROPÄISCHE PATENTSCHRIFT

(45) Veröffentlichungstag der Patentschrift :
13.05.92 Patentblatt 92/20

(51) Int. Cl.⁵ : **B60J 3/02**

(21) Anmeldenummer : **89122441.2**

(22) Anmeldetag : **05.12.89**

(54) **Sonnenblende für Fahrzeuge.**

(30) Priorität : **19.12.88 DE 3842705**

(43) Veröffentlichungstag der Anmeldung :
**27.06.90 Patentblatt 90/26**

(45) Bekanntmachung des Hinweises auf die
Patenterteilung :
**13.05.92 Patentblatt 92/20**

(84) Benannte Vertragsstaaten :
**BE DE ES FR GB IT SE**

(56) Entgegenhaltungen :
**EP-A- 0 231 440**
**GB-A- 567 958**
**US-A- 4 248 473**

(73) Patentinhaber : **Gebr. Happich GmbH**
**Postfach 10 02 49 Clausenbrücke 1**
**W-5600 Wuppertal 1 (DE)**

(72) Erfinder : **Viertel, Lothar**
**Lilienstrasse 4**
**W-6636 Altforweiler (DE)**
Erfinder : **Kaiser, Peter**
**Sellscheid 42**
**W-5632 Wermelskirchen (DE)**
Erfinder : **Welter, Patrick**
**Chemin de Romains**
**F-57730 La Chambre (FR)**

**Beschreibung**

Die Erfindung bezieht sich auf eine Sonnenblende für Fahrzeuge mit einem Sonnenblendenkörper, der um eine horizontale Achse klappbar, parallel zu dieser Achse verschiebbar und um eine etwa vertikale Achse verschwenkbar gelagert ist, einer etwa L-förmig ausgebildeten Sonnenblendenachse, einem an der Fahrzeugkarosserie befestigbaren Drehlagerböckchen, einem Gegenlagerstift und einem an der Fahrzeugkarosserie befestigbaren Gegenlagerböckchen.

Sonnenblenden der gattungsgemäßen Art sind durch die deutschen Offenlegungsschriften DE-A-32 35 997 und DE-A-36 03 852 bekanntgeworden. Obgleich sich die bekannten Sonnenblenden in der Praxis an sich gut bewährt haben, sind sie nicht von Mängeln frei. Es hat sich gezeigt, daß die bekannten Sonnenblenden einen relativ komplizierten, aus vielen Einzelteilen bestehenden Aufbau aufweisen, was hohe Herstellungskosten verursacht. Es hat sich ferner gezeigt, daß es oftmals wünschenswert wäre, wenn der Sonnenblendenkörper auch dann parallel zur Klappachse verschoben werden könnte, wenn er seine vor der Windschutzscheibe befindliche Position einnimmt. Bei den bekannten Sonnenblenden ist eine Verschiebung des Sonnenblendenkörpers hingegen nur dann vorgesehen, wenn er eine vor einem Seitenfenster befindliche Lage einnimmt. Schließlich wurde gefunden, daß es wünschenswert wäre, wenn die Sonnenblenden herkömmlicher Art ein verbessertes Aussehen erhielten.

Der vorliegenden Erfindung liegt hiernach, ausgehend von einer Sonnenblende der eingangs genannten Art, die Aufgabe zugrunde, diese so zu gestalten, daß sie ausgehend von ihrer Normallage nach links und rechts parallel zur Klappachse verschoben werden kann, und zwar insbesondere auch dann, wenn sie ihre Blendschutzposition vor einer Windschutzscheibe einnimmt und der Gegenlagerstift in der Lageraufnahme des Gegenlagerböckchens gelagert ist, daß sie möglichst wenig Einzelteile aufweist und einfacher und kostengünstiger herzustellen ist als die bekannten Vorbilder und daß sie schließlich ein besonders gutes, ansprechendes Aussehen erhält.

Diese Aufgabe wird erfindungsgemäß dadurch gelöst, daß der Sonnenblendenkörper an einer Längskante ein Gleitlagerelement aufweist, das mit einem zweiten, an einem länglichen, sich parallel zum Sonnenblendenkörper erstreckenden Trägerkörper angeordneten Gleitlagerelement verdrehfest jedoch verschiebebeweglich gekuppelt ist, daß der Trägerkörper an einem Endbereich eine Lagerbohrung aufweist, in der ein Schenkel der Sonnenblendenachse drehbeweglich jedoch verschiebefest gelagert ist und daß der Trägerkörper am anderen Endbereich mit dem in eine Lageraufnahme des Gegenlagerböckchens einführbaren Gegenlagerstift ausgerüstet ist.

Durch diese erfindungsgemäßen Maßnahmen werden besondere Vorteile in verschiedener Hinsicht erzielt. Dabei ist zunächst wesentlich, die Funktionstrennung zwischen den Lagerelementen für die Klappbewegung des Sonnenblendenkörpers einerseits und denen für die Verschiebebewegung desselben andererseits. Die Lagerelemente können damit relativ einfach, nur ihren funktionellen Erfordernissen entsprechend und unbeeinflußt von den funktionellen Erfordernissen der jeweils anderen Lagerelemente ausgelegt werden. Damit sind durch die vorliegende Erfindung Schwierigkeiten, wie sie z.B. in der DE-A- 32 35 997 geschildert sind, nun nicht mehr gegeben.

Weiterhin ist es wesentlich, daß der Sonnenblendenkörper nunmehr, ausgehend von einer Grundstellung nach links und rechts bzw. nach vorne und hinten parallel zur Klappachse verschoben werden kann. Befindet sich der Sonnenblendenkörper vor der Windschutzscheibe, so kann er nunmehr sowohl in Richtung zum, im allgemeinen in der Fahrzeuglängsmittelachse angebrachten Innenspiegel als auch zu einer der vorderen Seitenscheiben hin bewegt werden, womit ein optimaler Blendschutz erreicht ist. Andererseits kann der Sonnenblendenkörper, in seiner etwa parallel zu einem Seitenfenster ausgerichteten Lage sowohl nach vorne, in Richtung zur A-Säule, als auch nach hinten, in Richtung zur B-Säule, verschoben werden. Die Blendschutzwirkung der erfindungsgemäßen Sonnenblende konnte damit, im Vergleich zu bekannten Vorbildern optimiert werden.

Durch die Erfindung wird weiterhin eine wesentliche Vereinfachung bei der Sonnenblendenherstellung erreicht. So kann z.B. eine Sonnenblendenachse verwendet werden, wie sie auch für Standard-Sonnenblenden, bei denen keine Verschiebbarkeit des Sonnenblendenkörpers vorgesehen ist, benutzt wird.

Eine besondere Vereinfachung ergibt sich durch die erfindungsgemäßen Maßnahmen auch hinsichtlich der Herstellung des Sonnenblendenkörpers. In Anbetracht dessen, daß die Sonnenblendenachse und der Gegenlagerstift nunmehr im Trägerkörper gelagert sind, kann der Sonnenblendenkörper wegen hier nicht mehr zu berücksichtigender Lagerelemente für die Sonnenblendenachse, dem hier nicht mehr vorhandenen Gegenlagerstift und des nicht mehr erforderlichen Gegenlagerauges wesentlich einfach und kostengünstiger hergestellt werden, was insbesondere auch für die Umhüllung des Sonnenblendenkörpers zutrifft, für die nur noch eine, auch die Schweißelektrode vereinfachende, Rundumschweißnaht vorzusehen ist.

Ein Verschwenken des Sonnenblendenkörpers von der Windschutzscheibe zu einer Seitenscheibe und

2

umgekehrt kann nunmehr, unabhängig von der Schiebeposition, die der Sonnenblendenkörper in bezug auf den Trägerkörper einnimmt, erfolgen, weil die Position des Gegenlagerstiftes zu der des Gegenlagerböckchens hiervon unbeeinflußt bleibt.

Durch die erfindungsgemäßen Maßnahmen wird auch das äußere Erscheinungsbild der neuen Sonnenblende positiv beeinflußt. Insbesondere erscheint beim Verschieben des Sonnenblendenkörpers nun nicht mehr ein langer, frei liegender Achsschenkel.

Die Gleitlagerführung kann aus, z.B. schwalbenschwanzförmig ineinandergreifenden Gleitlagerelementen bestehen. Es kann auch ein mit einem Längsschlitz versehenes Führungsrohr vorgesehen sein, in dem ein dessen Querschnittsöffnung angepaßter Gleitstein angeordnet ist. Bevorzugterweise bestehen die Gleitlagerelemente jedoch aus im Querschnitt gesehen U-förmigen Gleitschienen unterschiedlicher Breite, von denen die schmalere Gleitschiene mit ihrer offenen Seite in die offene Seite der breiteren Gleitschiene eingesetzt ist, wobei die Schenkel der Gleitschienen mit längsdurchlaufenden, Kugeln aufnehmenden Hohlkehlen mit endseitigen Anschlägen ausgebildet sind und wobei die Kugeln in den Schenkeln eines als U-Schiene ausgebildeten Kugelkäfigs sitzen, der sich zwischen den Schenkeln der breiteren Gleitschiene befindet, die Schenkel der schmaleren Gleitschiene übergreift und eine wesentlich geringere Länge als die Gleitschienen aufweist. Damit ist der Sonnenblendenkörper nur über die Kugeln längverschiebbar mit dem Trägerkörper verbunden, womit sich ein zuverlässiger Zusammenhalt und eine leichtgängige Verschiebbarkeit ergibt.

In Weiterbildung der Erfindung kann vorgesehen sein, daß der Trägerkörper einendig eine stirnseitig offene Lagerbohrung für die Aufnahme eines Schenkels der Sonnenblendenachse und rechtwinklig hierzu eine von unten her zugängliche Stecköffnung zum Einsetzen einer den in der Lagerbohrung befindlichen Schenkel der Sonnenblendenachse klemmenden Rastfeder aufweist und daß der Trägerkörper anderendig eine zweite mit der ersten fluchtende Lagerbohrung für den hierin axial beweglich aufgenommenen Gegenlagerstift aufweist. Dabei kann weiterhin vorgesehen sein, daß die Wandung des Trägerkörpers im Bereich der Lagerbohrung für den Gegenlagerstift einen langlochartigen Druchbruch aufweist, der von einem einendig am Gegenlagerstift befestigten Stift durchsetzt ist, der am anderen Ende mit einer eine Axialverschiebung des Gegenlagerstifts ermöglichenden Handhabe versehen ist. Die Lageraufnahme des Gegenlagerböckchens besteht, gemäß einer weiteren Ausgestaltung der Erfindung, aus einer Sackbohrung, deren Wandung im Bohrungseingangsbereich eine seitliche, radiale Schlitzöffnung aufweist, durch die hindurch der Gegenlagerstift herausgeschwenkt werden kann, um den Sonnenblendenkörper nebst Trägerkörper von der Windschutzscheibe zu einer vorderen Seitenscheibe schwenken zu können. Durch die axiale Verschiebbarkeit des Gegenlagerstifts und durch die (bereichsweise) sacklochartige Ausbildung der Lageraufnahme des Gegenlagerböckchens ist es nun nicht mehr möglich, daß sich der Gegenlagerstift beim Klappen des Sonnenblendenkörpers aus der Lageraufnahme herausdrehen kann, was früher oftmals, z.B. beinicht exakter Fluchtung der Achslinie, der Fall war.

Der Sonnenblendenkörper kann, in Weiterbildung der Erfindung, als Kunststoff-Schaumteil ausgebildet sein und eingeschäumte Dübelelemente od. dgl. zur Aufnahme von Befestigungselementen zur Festlegung des am Sonnenblendenkörper anzuordnenden Gleitlagerelements aufweisen. Alternativ kann der Sonnenblendenkörper auch aus einem einstückigen oder zweischaligen Kunststoff-Spritzgußteil bestehen oder zusammengesetzt sein. Im letzteren Fall läßt sich eine Verbindung mit Befestigungselementen für das zugehörige Gleitelement, durch bereichsweises Umspritzen derselben, einfach und kostengünstig herstellen.

Bevorzugterweise besteht der Trägerkörper, gemäß einer Weiterbildung der Erfindung, aus einem einstückig ausgebildeten Kunststoff-Spritzgußteil, an dem das Gleitlagerelement z.B. durch eine Einklips-, Klebe-, Ultraschall-, Schraub-, Einschiebe- od. dgl. Verbindung festgelegt ist. Die Sonnenblendenachse und die Rastfeder sind dabei vorzugsweise durch Umspritzen am Trägerkörper festgelegt.

Zum guten Aussehen der erfindungsgemäßen Sonnenblende trägt bei, daß der Sonnenblendenkörper, der vorzugsweise eine Umhüllung aus Verkleidungsmaterial, wie Kunststoffolie, textiles Flächengebilde, Leder od. dgl. aufweist, einendig etwa mit der Außenseite des Drehlagerböckchens und anderendig etwa mit der Außenseite des Gegenlagerböckchens in seiner Normallage abschließt.

Schließlich besteht eine das gute Aussehen der Sonnenblende begünstigende und gleichzeitig eine Funktionserweiterung darstellende Maßnahme der Erfindung, die insbesondere in Verbindung mit einem am Sonnenblendenkörper angeordneten Kosmetik-Spiegel wertvoll ist, noch darin, daß das Gegenlagerböckchen eine, vorderseitig mit einer Abdeckung aus lichtdurchlässigem Material versehene Aufnahmekammer für eine darin unterzubringende mit der Fahrzeugelektrik verbindbare Beleuchtungseinrichtung aufweist.

Die Erfindung wird nachfolgend anhand eines in der Zeichnung dargestellten Ausführungsbeispiels näher erläutert. Es zeigen

Fig. 1 eine Seitenansicht der kompletten Sonnenblende und

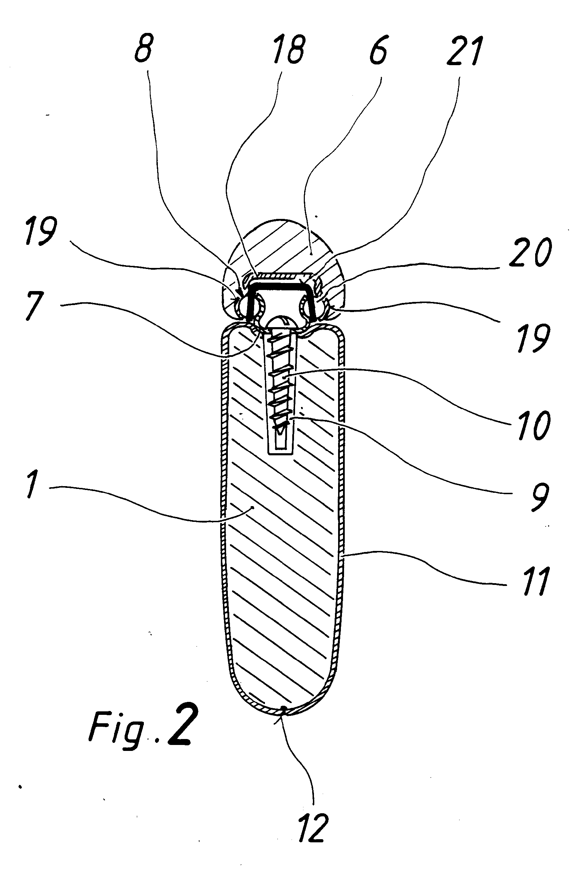

Fig. 2 einen Schnitt durch die Sonnenblende etwa folgend der Linie II - II in Fig. 1.

Die neue Sonnenblende besteht aus einem Sonnenblendenkörper 1, einem Drehlagerböckchen 2, einer Sonnenblendenachse 3, einem Gegenlagerstift 4, einem Gegenlagerböckchen 5 und einem Trägerkörper 6.

Der Trägerkörper 6 ist als separates Bauteil hergestellt und gleitlagerartig mit dem ebenfalls als separates Bauteil hergestellten Sonnenblendenkörper 1 verbunden. Der Sonnenblendenkörper 1 weist an einer Längskante, nämlich an der, die dem Trägerkörper 6 unmittelbar benachbart ist, ein Gleitlagerelement auf, das vorzugsweise als Gleitschiene 7 ausgebildet ist und einen U-förmigen Querschnitt aufweist, wobei die Schenkel der Gleitschiene 7 mit nach innen gerichteten, längsdurchlaufenden Hohlkehlen 8 versehen sind. Die Gleitschiene 7 ist am Sonnenblendenkörper 1 zuverlässig festgelegt, z.B. mittels im Sonnenblendenkörper 1 angeordneter Dübelelemente 9 und darin eingreifender Schrauben 10.

Der Sonnenblendenkörper 1 kann als Kunststoff-Spritzgußteil ggf. in Schalenbauweise ausgebildet sein oder - wie dargestellt - aus einem Kunststoff-Schaumteil bestehen. Der Sonnenblendenkörper 1 weist eine außenseitige, z.B. aus zwei Kunststoffolien-Zuschnitten bestehende Umhüllung 11 auf und die Kunststoffolien-Zuschnitte werden durch eine peripherische Schweißnaht 12 zusammengehalten.

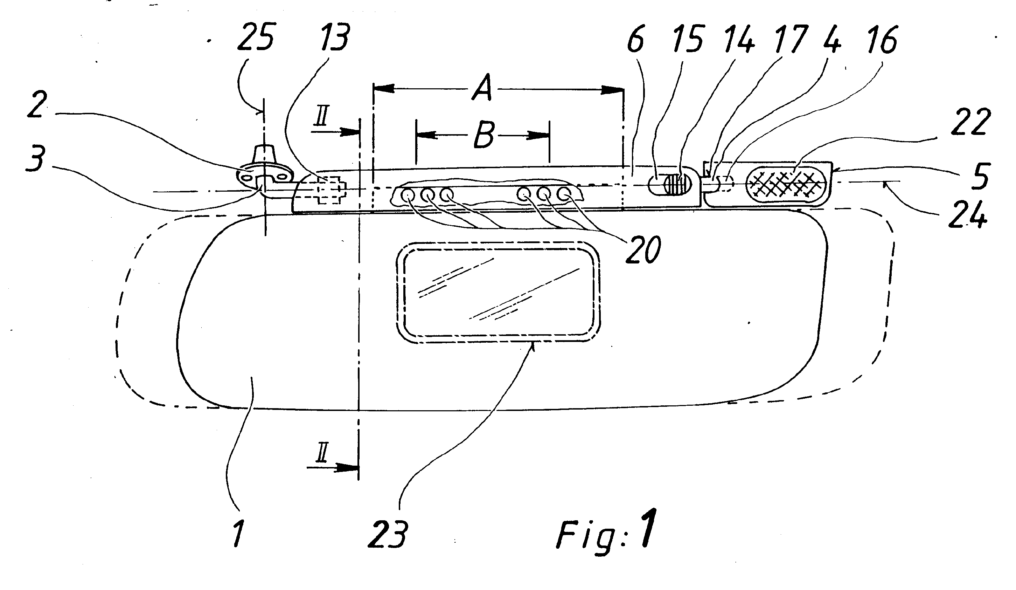

Der Trägerkörper 6 besteht bevorzugterweise aus einem Kunststoff-Spritzgußteil, obgleich er auch als Blechformteil herstellbar ist. Linksseitig von Fig. 1 greift in den Trägerkörper 6 der lange Schenkel der Sonnenblendenachse 3 ein, die ebenso wie das Drehlagerböckchen, herkömmlicher Bauart ist und daher nicht näher erläutert wird. Der lange Schenkel der Sonnenblendenachse 3, der zumindest eine Abflachung aufweisen kann, wird von einer üblichen, U-förmig ausgebildeten Rastfeder 13 übergriffen. Der Trägerkörper 6 weist Aufnahmen für die Sonnenblendenachse 3 und für die Rastfeder 13 auf. Alternativ sind der lange Schenkel der Sonnenblendenachse 3 und die Rastfeder 13 durch Umspritzen am Trägerkörper 6 festgelegt.

Wie in Fig. 1, zeichnungsrechtsseitig gezeigt, ist der Trägerkörper 6 weiterhin mit dem schon erwähnten Gegenlagerstift 4 ausgerüstet. Der Gegenlagerstift 4 ist in einer Bohrung des Trägerkörpers 6 axialbeweglich geführt aufgenommen und trägt über einen nicht näher dargestellten Stift eine als Schiebekopf ausgebildete Handhabe 14. Der Stift der Handhabe 14 durchsetzt eine als Langloch 15 ausgebildete Öffnung des Trägerkörpers 6. Die axiale Verschiebbarkeit des Gegenlagerstifts 4 ermöglicht es, die Lageraufnahme des Gegenlagerböckchens 5 als Sackbohrung 16 zu gestalten. Der Eingangsbereich der Sackbohrung 16 weist eine radiale Schlitzöffnung 17 auf, die es zuläßt, den Gegenlagerstift 4 in seiner entriegelten Lage vom Gegenlagerböckchen abzuziehen, um den Sonnenblendenkörper 1 mit Trägerkörper 6 zur Seitenscheibe hin zu schwenken. Der Gegenlagerstift 4 ist mit nicht dargestellten Endrasten versehen.

Der Trägerkörper 6 trägt weiterhin eine unterseitig angeordnete Gleitschiene 18, die - ebenso wie die Gleitschiene 7 - U-förmig ausgebildet ist, wobei die Schenkel mit nach außen gerichteten Hohlkehlen 19 versehen sind. Die gegenüber der Gleitschiene 18 schmalere Gleitschiene 7 greift mit ihrer offenen Seite in die offene Seite der Gleitschiene 18 ein. Die Gleitschienen 7 und 18 sind über Kugeln 20, die in den Hohlkehlen 8 und 19 geführt und von den Schenkeln eines U-förmig gestalteten Kugelkäfig 21 getragen werden, zusammengehalten. Die Kugeln 20 bewirken nicht nur den Zusammenhalt sondern ermöglichen es, den Sonnenblendenkörper 1 - wie mit gestrichelten Linien gezeigt - nach links und rechts zu verschieben. Der Längenbereich der Gleitschiene am Sonnenblendenkörper 1 und am Trägerkörper 6 ist in Fig. 1 mit A in etwa angegeben, während mit B der Längenbereich des Kugelkäfigs 21, der sich beim Verschieben des Sonnenblendenkörpers 1 mit negativer Übersetzung frei mitbewegt, in etwa angegeben ist. Die Hohlkehlen 8 und 19 weisen beidseitige, durch Eindrückungen od. dgl. gebildete Endanschläge auf, damit der Sonnenblendenkörper 1 nicht gänzlich vom Trägerkörper 6 abgezogen werden kann.

Wie die Zeichnung (Fig. 1) weiterhin zeigt, ist das Gegenlagerböckchen 5 mit einer Beleuchtungseinrichtung, von der allerdings nur das Lichtfenster 22 zu sehen ist, ausgerüstet. Auf diese Weise kann der im Sonnenblendenkörper 1 befindliche Spiegel 23, der lediglich mit strichpunktierten Linien angedeutet ist, auch bei Dunkelheit benutzt werden.

Fig. 1 zeigt den Sonnenblendenkörper 1 in seiner normalen Gebrauchslage. Aus dieser Gebrauchslage kann er nun über die beschriebene Gleitlagereinrichtung, je nach störendem Lichteinfall, nach links oder rechts bewegt werden. Die Bewegungen bleiben für die Sonnenblendenachse 3 und den Gegenlagerstift 4 unbeeinflußt, die also in ihrer dargestellten Position verharren. Der Sonnenblendenkörper 1 kann weiter, über die durch den langen Schenkel der Sonnenblendenachse 3 und den Gegenlagerstift 4 definierte Klappachse 24 in die Nichtgebrauchslage geklappt werden. Schließlich ist es möglich, den Sonnenblendenkörper 1 nebst Trägerkörper 6 um die Schwenkachse 25 zu einem vorderen Seitenfenster eines Fahrzeuges hin zu schwenken, wo dann wiederum die Möglichkeit der Längsverschiebung besteht.

**Patentansprüche**

1. Sonnenblende für Fahrzeuge mit einem Sonnenblendenkörper (1), der um eine etwa horizontale Achse (24) klappbar, parallel zu dieser Achse (24) verschiebbar und um eine etwa vertikale Achse (25) verschwenkbar gelagert ist, einer etwa L-förmig ausgebildeten Sonnenblendenachse (3), einem an der Fahrzeugkarosserie befestigbaren Drehlagerböckchen (2), einem Gegenlagerstift (4) und einem an der Fahrzeugkarosserie befestigbaren Gegenlagerböckchen (5), dadurch gekennzeichnet, daß der Sonnenblendenkörper (1) an einer Längskante ein Gleitlagerelement aufweist, das mit einem zweiten, an eine länglichen, sich parallel zum Sonnenblendenkörper (1) erstreckenden Trägerkörper (6) angeordneten Gleitlagerelement verdrehfest jedoch verschiebebeweglich gekuppelt ist, daß der Trägerkörper (6) an einem Endbereich eine Lagerbohrung aufweist, in der ein Schenkel der Sonnenblendenachse (3) drehbeweglich jedoch verschiebefest gelagert ist und daß der Trägerkörper (6) am anderen Endbereich mit dem in eine Lageraufnahme des Gegenlagerböckchens (5) einführbaren Gegenlagerstift (4) ausgerüstet ist.

2. Sonnenblende nach Anspruch 1, dadurch gekennzeichnet, daß die Gleitlagerelemente aus im Querschnitt gesehen U-förmigen Gleitschienen (7, 18) unterschiedlicher Breite bestehen, von denen die schmalere Gleitschiene (7) mit ihrer offenen Seite in die offene Seite der breiteren Gleitschiene (18) eingesetzt ist, daß die Schenkel der Gleitschienen mit längsdurchlaufenden, Kugeln (20) aufnehmenden Hohlkehlen (8, 19) mit endseitigen Anschlägen ausgebildet sind und daß die Kugeln (20) in den Schenkeln eines als U-Schiene ausgebildeten Kugelkäfigs (21) sitzen, der sich zwischen den Schenkeln der breiteren Gleitschiene befindet, die Schenkel der schmaleren Gleitschiene übergreift und eine wesentlich geringere Länge als die Gleitschienen (7, 18) aufweist.

3. Sonnenblende nach Anspruch 1 oder 2, dadurch gekennzeichnet, daß der Trägerkörper (6) einendig eine stirnseitig offene Lagerbohrung für die Aufnahme eines Schenkels der Sonnenblendenachse (3) und rechtwinklig hierzu eine von unten her zugängliche Stecköffnung zum Einsetzen einer den in der Lagerbohrung befindlichen Schenkel der Sonnenblendenachse (3) klemmenden Rastfeder (13) aufweist und daß der Trägerkörper (6) anderendig eine zweite mit der ersten fluchtende Lagerbohrung für den hierin axial beweglich aufgenommenen Gegenlagerstift (4) aufweist.

4. Sonnenblende nach einem oder mehreren der Ansprüche 1 bis 3, dadurch gekennzeichnet, daß die Wandung des Trägerkörpers (6) im Bereich der Lagerbohrung für den Gegenlagerstift (4) einen langlochartigen Durchbruch (15) aufweist, der von einem einendig am Gegenlagerstift (4) befestigten Stift durchsetzt ist, der am anderen Ende mit einer eine Axialverschiebung des Gegenlagerstifts (4) ermöglichenden Handhabe (14) versehen ist.

5. Sonnenblende nach einem oder mehreren der Ansprüche 1 bis 4, dadurch gekennzeichnet, daß die Lageraufnahme des Gegenlagerböckchens (5) aus einer Sackbohrung (16) besteht, deren Wandung im Bohrungseingangsbereich eine seitliche, radiale Schlitzöffnung (17) aufweist, durch die hindurch der Gegenlagerstift (4) herausgeschwenkt werden kann, um den Sonnenblendenkörper (1) nebst Trägerkörper (6) von der Windschutzscheibe zu einer vorderen Seitenscheibe schwenken zu können.

6. Sonnenblende nach einem oder mehreren der Ansprüche 1 bis 5, dadurch gekennzeichnet, daß der Sonnenblendenkörper (1) als Kunststoff-Schaumteil ausgebildet ist und eingeschäumte Dübelelemente (9) od. dgl. zur Aufnahme von Befestigungselementen (10) zur Festlegung des am Sonnenblendenkörper (1) anzuordnenden Gleitlagerelements (7) aufweist.

7. Sonnenblende nach einem oder mehreren der Ansprüche 1 bis 5, dadurch gekennzeichnet, daß der Sonnenblendenkörper (1) aus einem einstückigen oder zweischaligen Kunststoff-Spritzgußteil besteht oder zusammengesetzt ist.

8. Sonnenblende nach einem oder mehreren der Ansprüche 1 bis 7, dadurch gekennzeichnet, daß der Trägerkörper (6) aus einem einstückig ausgebildeten Kunststoff-Spritzgußteil besteht, an dem das Gleitelement (18) z.B. durch eine Einklips-, Klebe-, Ultraschall-, Schraub-, Einschiebe- od. dgl. Verbindung festgelegt ist-.

9. Sonnenblende nach einem oder mehreren der Ansprüche 1 bis 8, dadurch gekennzeichnet, daß der Sonnenblendenkörper (1), der vorzugsweise eine Umhüllung (11) aus Verkleidungsmaterial, wie Kunststoffolie, textiles Flächengebilde, Leder od. dgl. aufweist, einendig etwa mit der Außenseite des Drehlagerböckchens (2) und anderendig etwa mit der Außenseite des Gegenlagerböckchens (5) abschließt.

10. Sonnenblende nach einem oder mehreren der Ansprüche 1 bis 9, dadurch gekennzeichnet, daß das Gegenlagerböckchen (5) eine, vorderseitig mit einer Abdeckung (22) aus lichtdurchlässigem Material versehene Aufnahmekammer für eine darin unterzubringende mit der Fahrzeugelektrik verbindbare Beleuchtungseinrichtung aufweist.

## Claims

1. A sun visor for vehicles and comprising a sun visor body (1) which is foldable around an approximately horizontal axis (24), movable parallel to this axis (24), and pivotable around an approximately vertical axis (25), and has an approximately L-shaped sun visor shaft (3), a pivot bearing holder (2) secured to the vehicule body, an abutment pin (4) and an abutment holder (5) secured to the vehicule body, characterised in that the sun visor body (1), along one longitudinal edge, comprises a friction bearing member non-rotatably by movably coupled to a second friction-bearing member disposed on an elongate bearing member (6) extending parallel to the sun visor body (1), one end region of the bearing member (6) is formed with a bore in which an arm of the sun visor shaft (3) is non-rotatably but movably mounted, and that the other end region of the bearing member (6) comprises an abutment pin (4) for inserting into a recess in the abutment-pin holder (5).

2. A sun visor according to claim 1, characterised in that the friction bearing members comprise slide rails (7, 18) differing in width and having a U-shaped cross-section, the open side of the narrower rail (7) fitting into the open side of the wider rail (18), that the arms of the slide rails are formed with continuous longitudinal grooves (8, 19) with end abutments and receiving the balls (20), and that the balls (20) rest in the arms of a cage (21) in the from of a U rail which is disposed between the arms of the wider slide rail, extends over the arms of the narrower slide rail and is considerably shorter than the slide rails (7, 18).

3. A sun visor according to claim 1 or 2, characterised in that one end of the bearing member (6) is formed with a bore, open at the end, for receiving one arm of the sun-visor shaft (3) and, at right angles thereto, has a downwardly accessible opening for inserting a catch spring (13) for clamping the arm of the sun visor shaft (3) in the bore, and that the other end of the bearing member (6) has a second bore, flush with the first, for receiving an abutment pin (4), which is axially movable therein.

4. A sun visor according to one or more of claims 1 to 3, characterised in that, in the neighbourhood of the bore for the abutment pin (4), the wall of the bearing member (6) has a slot-like aperture (15) to which a pin secured at one end to the abutment pin (4) extends, the other end of the pin being provided with a handle (14) for axially moving the abutment pin (4).

5. A sun visor according to one or more of claims 1 to 4, characterised in that the bearing recess in the abutment holder (5) comprises a blind bore (16) the wall of which, in the bore inlet region, is formed with a lateral radial slot opening (17), through which the abutment pin (4) can be swung out in order to pivot the sun visor body (1) and the bearing member (6) from the windscreen to a front side window.

6. A sun visor according to one or more of claims 1 to 5, characterised in that the sun visor body (1) is a plastics foam part and comprises integrally foamed socket components (9) or the like for receiving the components (10) for securing the friction bearing component (7) disposed on the sun visor body (1).

7. A sun visor according to one or more of claims 1 to 5, characterised in that the sun visor body (1) is a one-piece or two-shell plastics injection-moulded part.

8. A sun visor according to one or more of claims 1 to 7, characterised in that the bearing member (6) comprises a one-piece plastic injection-moulded part to which the slide member (18) is secured e.g. by a snap-fastening or adhesive or ultrasonic or screw or plug-in or other connection.

9. A sun-visor according to one or more of claims 1 to 8, characterised in that the sun-visor body (1), which preferably has a cover (11) of coating material such as plastics foil, textile web, leather or the like, is approximately bounded at one end by the outside of the pivot bearing holder (2) and approximately bounded at the other end by the outside of the abutment holder (5).

10. A sun visor according to one or more of claims 1 to 9, characterised in that the abutment holder (5) comprises a chamber, provided at the front with a translucent-material cover (22), for receiving a lighting device connected to the electric system of the vehicle.

**Revendications**

1. Pare-soleil pour véhicules comprenant un corps de pare-soleil (1) qui est monté de façon à pouvoir être rabattu autour d'un axe horizontal (24), déplacé parallèlement à cet axe (24) et pivoté autour d'un axe sensiblement vertical (25), un axe de pare-soleil (3) constitué sensiblement en forme de L, un palier de rotation (2) fixé à la carrosserie du véhicule, une tige de contre-palier (4) et un support de contre-palier (5) fixé à la carrosserie du véhicule, caractérisé en ce que le corps (1) du pare-soleil comprend sur un bord longitudinal un élément de palier coulissant qui est accouplé de façon fixe en rotation mais mobile axialement avec un second élément de palier coulissant allongé et s'étendant parallèlement au corps (1) du pare-soleil, que le corps de support (6) comprend dans une région d'extrémité un perçage de palier dans lequel peut être montée de façon mobile en rotation mais fixe en translation une branche de l'axe (8) du pare-soleil, et que le corps de support (6) est équipé à son autre extrémité d'une tige de contre-palier (4) pouvant être introduite dans le logement de palier de l'élément de contre-palier (8).

2. Pare-soleil selon la revendication 1, caractérisé en ce que les éléments de palier coulissants sont constitués par des rails coulissants (7, 18) en forme de U quand on les voit en section transversale, et de largeurs différentes, le rail de coulissement le plus étroit (7) étant introduit par son côté ouvert dans le côté ouvert du rail de coulissement le plus large (18), les branches des rails de coulissement comprenant des cannelures creuses (18, 19) contenant des billes et orientées longitudinalement et comprenant des butées d'extrémité, et en ce que les billes (20) sont disposées dans les branches d'une cage à billes (21) constituée sous forme d'un rail en forme de U, placée entre les branches du rail de coulissement le plus large, recouvrant les branches du rail de coulissement le plus étroit et présentant une longueur sensiblement plus faible que celle des rails de coulissement (7, 18).

3. Pare-soleil selon la revendication 1 ou 2, caractérisé en ce que le corps de support (6) comprend à une extrémité un perçage de palier ouvert vers le côté frontal et destiné à la réception d'une branche de l'axe (3) du pare-soleil et à angle droit une ouverture d'introduction accessible par le dessous et destinée à l'introduction d'un ressort d'arrêt (13) serrant la branche de l'axe (3) du pare-soleil qui se trouve dans le perçage de palier, et en ce que le corps de support (6) comprend à son autre extrémité un second perçage de palier en alignement avec le premier et destiné à la tige de contre-palier (4) qui y est reçue de façon à pouvoir se déplacer axialement.

4. Pare-soleil selon l'une quelconque ou plusieurs des revendications 1 à 3, caractérisé en ce que la paroi du corps de support (6) dans la région du perçage de palier comprend pour la tige de contre-palier (4) une ouverture (15) en forme de trou allongé qui est traversée par une tige fixée par une extrémité à la tige de contre-palier (4) et qui est munie à son autre extrémité d'un bouton de manoeuvre (14) permettant de déplacer axialement la tige de contre-palier (4).

5. Pare-soleil selon l'une quelconque ou plusieurs des revendications 1 à 4, caractérisé en ce que l'évidement de palier du logement de contre-palier (5) est constitué par un trou borgne (16) dont la paroi comprend dans la région d'entrée du trou une ouverture en forme de fente radiale et latérale (17) dans laquelle la tige de contre-palier (4) peut être pivotée et sortie pour pouvoir faire pivoter le corps (1) du pare-soleil et le corps de support (6) depuis le pare-brise vers une vitre latérale avant.

6. Pare-soleil selon l'une quelconque ou plusieurs des revendications 1 à 5, caractérisé en ce que le corps (1) du pare-soleil est constitué sous forme d'un élément en mousse de matière plastique et comprend des éléments de vissage (9) ou analogues destinés à la réception d'éléments de fixation (10) pour la fixation de l'élément de palier et de coulissement (7) associé au corps (1) du pare-soleil et incorporés dans la mousse.

7. Pare-soleil selon l'une quelconque ou plusieurs des revendications 1 à 5, caractérisé en ce que le corps (1) du pare-soleil est constitué ou formé par l'assemblage d'éléments en mousse thermoplastique moulés par injection, d'un seul tenant ou constitué par deux coquilles.

8. Pare-soleil selon l'une quelconque ou plusieurs des revendications 1 à 7, caractérisé en ce que le corps de support (6) est constitué par un élément en matière plastique moulé par injection et d'un seul tenant, sur lequel est fixé l'élément de coulissement (18) par exemple par une liaison par enclipsage, collage, ultra-sons, vissage, enclenchement ou analogues.

9. Pare-soleil selon l'une quelconque ou plusieurs des revendications 1 à 8, caractérisé en ce que le corps (1) du pare-soleil, qui comprend de préférence une enveloppe (11) en un matériau de revêtement tel qu'une feuille en matière plastique, un revêtement de surface textile, du cuir ou analogues, se raccorde à une extrémité sensiblement au côté externe du logement de palier de rotation (2) et à l'autre extrémité sensiblement au côté externe du logement de contre-palier (5).

10. Pare-soleil selon l'une quelconque ou plusieurs des revendications 1 à 9, caractérisé en ce que le logement de contre-palier (5) comprend sur son côté avant un couvercle (22) en un matériau transparent et muni d'une chambre pouvant recevoir un dispositif d'éclairage placé à l'intérieur et pouvant être relié au système électrique du véhicule

25  13

6  15  14  17  4  16

2

3

II

A

B

22

5

24

20

II

1

23

Fig: 1

EP 0 374 582 B1

8

Fig.2